Europäisches Patentamt

European Patent Office

Office européen des brevets

(19)

(11)  EP 0 704 819 B1

(12)  **FASCICULE DE BREVET EUROPEEN**

(45) Date de publication et mention
de la délivrance du brevet:
**11.04.2001   Bulletin 2001/15**

(51) Int Cl.⁷: **G06K 19/07**, G01N 3/20

(21) Numéro de dépôt: **95402178.8**

(22) Date de dépôt: **28.09.1995**

(54) **Dispositif et procédé de test mécanique de cartes de circuit(s) intégré(s)**

Verfahren und Gerät zur mechanischen Prüfung einer Chipkarte

Method and apparatus for mechanically testing smart cards

(84) Etats contractants désignés:
**DE GB**

(30) Priorité:  **30.09.1994  FR 9411753**

(43) Date de publication de la demande:
**03.04.1996   Bulletin 1996/14**

(73) Titulaire: **FRANCE TELECOM
75015 Paris (FR)**

(72) Inventeur: **Amiot, Lucien
F-78350 Jouy en Josas (FR)**

(74) Mandataire: **Texier, Christian et al
Cabinet Régimbeau
20, rue de Chazelles
75847 Paris cedex 17 (FR)**

(56) Documents cités:
**US-A- 4 926 694          US-A- 5 184 517**

• **IBM TECHNICAL DISCLOSURE BULLETIN, vol. 32, no. 10A, Mars 1990 pages 315-317, 'SHEAR FORCE TESTERS ON CHIPS GLUED ON PCB'**

## Description

La présente invention concerne un dispositif de test mécanique pour une carte, telle qu'une carte de crédit ou une carte d'accès par exemple, comportant un ou plusieurs circuits intégrés à chacun desquels est associée, ou non, une zone de contacts électriques sur la carte.

L'invention se rapporte aussi à un procédé de mise en oeuvre d'un tel dispositif.

A ce jour, les dispositifs conçus et utilisés pour tester, évaluer, contrôler la qualité et la fiabilité des cartes à microcircuit dans le domaine de la résistance à la fatigue ou aux contraintes mécaniques ou physique sont les appareils de flexions et de torsions définis par les normes ISO 7816 et ISO/IEC 10373. Ces dispositifs ont permis de garantir un niveau de qualité minimum jusqu'alors.

Cependant, il apparaît que les dispositifs précités ne mettent pas toujours en évidence des types de défaillance observés sur le terrain, c'est-à-dire lors d'une utilisation normale et habituelle de la carte par son possesseur, telle qu'une cassure du cristal de circuit intégré ou d'un fil conducteur reliant ce circuit à une plage de contact électrique éventuelle de la carte, et qu'ils conviennent seulement pour des technologies de fabrication des cartes anciennes ou des niveaux de qualité moyens.

L'amélioration de la qualité des cartes, les nouvelles technologies utilisées pour leur fabrication, font que les dispositifs de test indiqués plus haut ne révèlent pratiquement plus de défaillance aujourd'hui, à l'issue des tests, alors qu'il en existe toujours sur le terrain, même s'il y en a proportionnellement moins par rapport aux cartes de technologies plus anciennes. Ceci reste vrai même si l'on augmente le niveau de contraintes apporté par ces dispositifs de test, par un nombre accru de flexions ou de torsions, ou une augmentation de la flèche de flexion ou de l'angle de torsion. Ces tests ne mettent donc plus en évidence les défaillances des nouvelles cartes à circuit(s) intégré(s), notamment à contacts, réellement observées sur le terrain, ce qui dénote une corrélation de moins en moins bonne entre le test et l'utilisation réelle.

L'invention a pour but l'élaboration d'un procédé de test mécanique de cartes particulièrement adapté aux tests de cartes à circuit(s) intégré(s), à contacts ou sans contacts, et d'un dispositif pour la mise en oeuvre de ce procédé.

Ce but est atteint et les inconvénients de l'art antérieur sont atténués grâce au fait que le dispositif décrit au premier paragraphe de la présente description est remarquable en ce qu'il comporte des premiers moyens de support contre lesquels est appliquée au moins une carte, des deuxièmes moyens de positionnement et de coulissement pour imprimer à ladite carte un mouvement alternatif de va-et-vient sensiblement dans son plan et au moins un rouleau presseur pour appliquer avec une force prédéterminée, par roulement sans glissement, ladite carte contre lesdits premiers moyens de support, lesdits premiers et deuxièmes moyens et ledit rouleau presseur étant agencés entre eux de telle sorte que le rouleau roule sur l'emplacement d'au moins une zone de circuit intégré de la carte à chaque mouvement de passage alternant de la carte.

Ce dispositif selon l'invention met en oeuvre le procédé comportant les étapes suivantes :

- l'insertion de chaque carte entre au moins un rouleau presseur et des moyens de support,
- l'application d'une force de pincement de la carte, comprise entre 7N et 15N, entre ledit (lesdits) rouleau(x) presseur(s) et lesdits moyens de support,
- la mise en mouvement de la carte selon un mouvement alternatif de va-et-vient sensiblement dans son plan dans un sens perpendiculaire aux génératrices du(des) rouleau(x) presseur(s) et de telle sorte que ce(ces) dernier(s) roule(nt) sur l'emplacement d'une zone de circuit intégré de la carte à chaque mouvement de passage alternant de la carte.

Par écrasement judicieux répété de la zone de la carte où se trouvent le circuit intégré, et ses liaisons avec les contacts le cas échéant, on obtient une meilleure corrélation entre les résultats du test et ceux de l'utilisation réelle, à la fois en termes de nature et de quantité des défaillances observées. Outre cet avantage essentiel, l'invention permet de tester rapidement une carte, en moins de 2 mm ; elle permet aussi d'obtenir la corrélation précitée pour chaque type d'application pour laquelle chaque carte est spécialisée, indépendamment de la technologie utilisée pour fabriquer la carte, et sans que cette dernière soit marquée par le dispositif de test à l'issue du test.

En outre, le test selon l'invention peut être complété par des tests classiques normalisés de torsion ou de flexion de la carte.

La description qui suit en regard des dessins annexés, le tout donné à titre d'exemple non limitatif fera bien comprendre comment l'invention peut être réalisée.

La figure 1 représente un premier mode de réalisation du dispositif selon l'invention, la figure 1A en vue latérale et la figure 1B en vue de dessus avec arrachement.

La figure 2 est une vue arrière partielle d'un deuxième mode de réalisation.

La figure 3 est une vue latérale avec arrachement d'un troisième mode de réalisation.

La figure 4 est une vue latérale avec arrachement d'un quatrième mode de réalisation.

La figure 5 est une vue latérale avec arrachement d'un cinquième mode de réalisation qui combine les deuxième, troisième et quatrième modes de réalisation de l'invention.

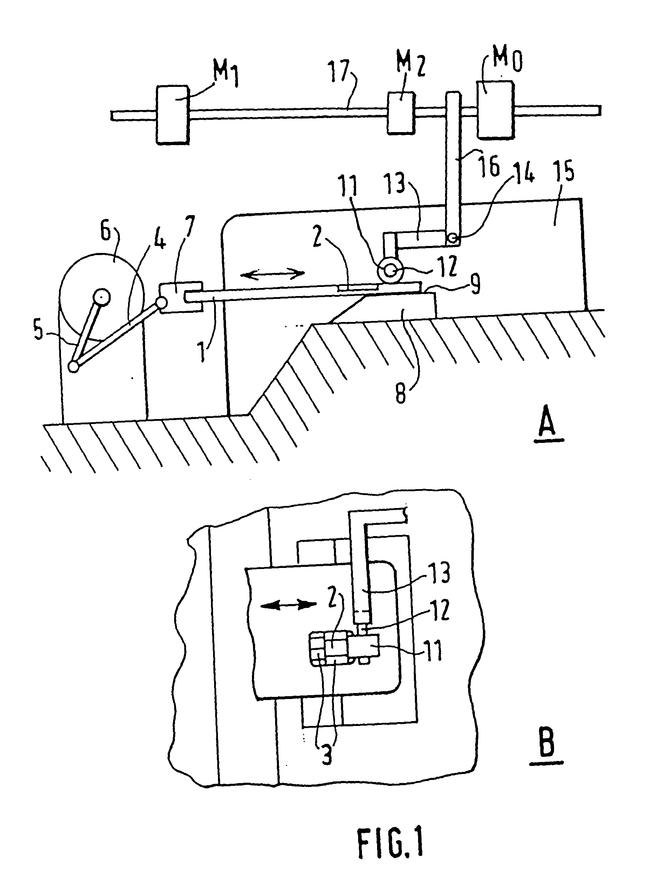

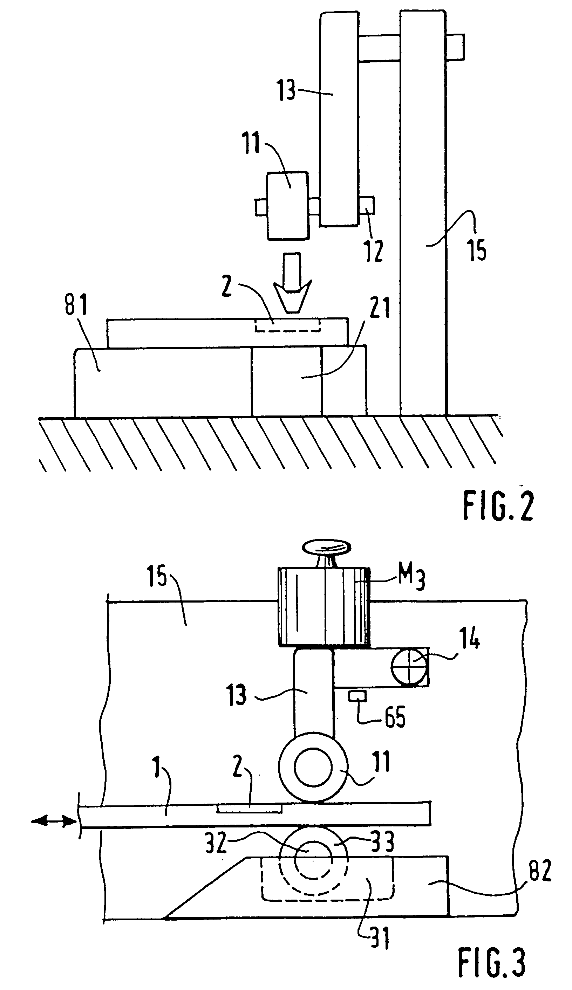

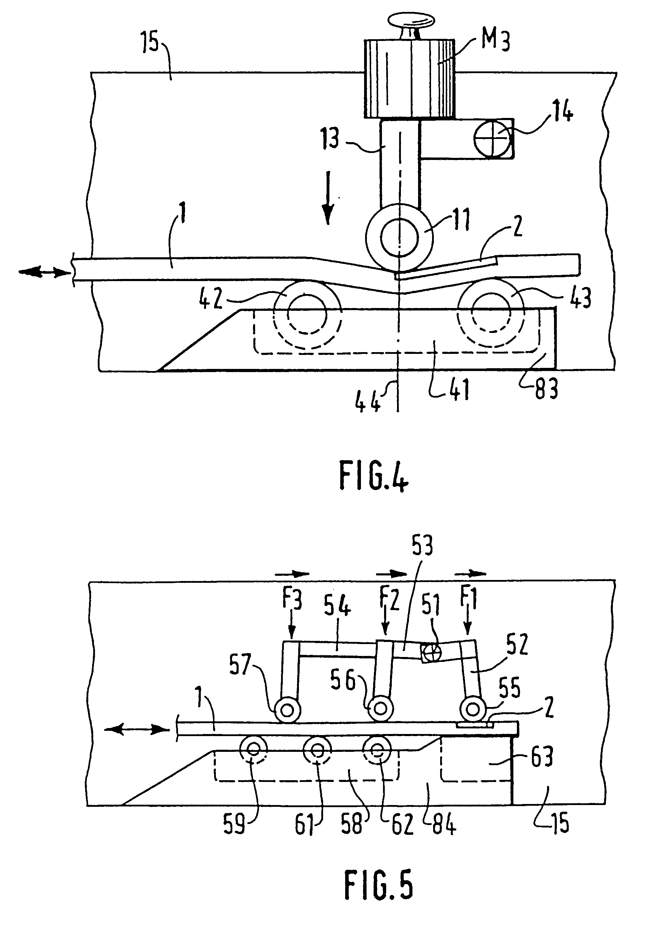

A la figure 1A, on a représenté de façon schématique un dispositif de test mécanique de cartes ainsi qu'une carte à circuit intégré 1 en cours de test comportant une zone de circuit intégré et de contacts 2, dans laquelle se trouve un circuit intégré (mémoire ou microprocesseur non visible sur le dessin) relié par des fils conducteurs ou des pistes conductrices à des plages de contact 3 (figure 1B). Le dispositif de test est lui-même constitué par un système bielle-manivelle (bielle 4 et manivelle 5) entraîné de façon connue par un moteur 6, un moteur électrique de préférence. A l'extrémité de la bielle 4 sont articulées des pinces 7 qui maintiennent fermement la carte 1 à l'une de ses extrémités. Un socle 8, muni d'une extrémité en biseau pour l'introduction des cartes à tester, constitue des premiers moyens de support de la carte 1. Ce socle est constitué par un bloc de matériau présentant une face plane 9 conçue pour supporter à glissement avec une force prédéterminée chaque carte à tester et il est par exemple réalisé en téflon. Un rouleau 11, monté à rotation libre sur un axe 12, presse la carte contre le socle 8. L'axe 12 est lui-même solidaire d'un bras coudé 13 monté à pivotement sur un axe 14 supporté par une cloison 15. Sur la figure 1A est représenté un deuxième bras 16, qui est solidaire du bras 13 et, comme ce dernier, monté à rotation sur l'axe 14. Le bras 16 comporte à son extrémité libre une tige 17 qui lui est perpendiculaire et sur laquelle peuvent coulisser trois masses M0, M1 et M2 . Au moyen de ce dispositif annexe il est ainsi possible de faire varier le couple et donc la force à appliquer par le rouleau 11 contre la carte 1, depuis la valeur nulle jusqu'à une force supérieure à celle nécessaire pour effectuer le test de la carte. On notera que, lorsque la force à appliquer pour réaliser le test pour un type de carte connu quant à son application est déjà prédéterminée, une variante plus simple que la réalisation du sous-ensemble constitué par les éléments 16, 17, M0, M1 et M2, consiste à lester le bras 13, comme représenté sur les figures 3 et 4 décrites ci-dessous.

Les éléments 4 à 7 constituent des deuxièmes moyens de positionnement et de coulissement qui impriment à la carte un mouvement alternatif de va-et-vient sensiblement dans un plan (plan horizontal de préférence) et de façon telle que le rouleau reste en permanence au contact de la carte. Par ailleurs, le rouleau 11, qui est réalisé en un matériau dur ou demi-dur conçu pour ne pas marquer la carte à l'issue du test, le support 8 et le système bielle-manivelle 4 à 7, sont agencés entre eux de façon que le rouleau 11 roule sur toute la zone du circuit intégré et des contacts 2 à chaque mouvement de passage alternant de la carte. On notera aussi que la largeur du rouleau (voir figure 1B) est légèrement inférieure au diamètre de la zone 2, et par exemple égale à 5 mm.

La force que doit appliquer le rouleau 11 diffère selon l'application prévue pour la carte à tester. Pour une application standard de carte bancaire, cette force est de l'ordre de 7N à 9N et pour une carte de contrôle d'accès, de l'ordre de 14N à 16N.

Le nombre de passages du rouleau presseur sur la zone 2 varie selon la durée d'utilisation simulée. Pour une durée d'utilisation d'un an, par exemple, le nombre de passages aller et retour est de l'ordre de 50, à une fréquence de 0,5 Hz environ.

Le mode de réalisation du dispositif de test représenté à la figure 2 est caractérisé par le fait que le bloc de matériau support, référencé 81, comporte, en regard du rouleau presseur 11, une fente 21 dont la largeur est sensiblement égale au diamètre de la zone 2 de la carte, et de l'ordre de 1,5 fois la largeur du rouleau 11, soit par exemple 8 mm pour une largeur du rouleau de 5 mm. Lors du test, la carte glisse encore sur le support 81, sauf à l'aplomb du rouleau 11 où est engendré un effet de porte-à-faux.

A la figure 3, selon un troisième mode de réalisation, le bloc de matériau support 82 comporte un logement (évidement) 31 pour recevoir à rotation libre autour d'un axe 32 un rouleau de support 33, situé en regard du rouleau presseur 11. L'effet du test obtenu avec ce troisième dispositif est comparable à celui résultant du premier dispositif de la figure 1. Par contre, l'absence de frottements facilite ici les mouvements de va-et-vient de la carte au cours du test.

Dans le mode de réalisation de la figure 4, le rouleau 33 de la figure 3 est remplacé par une paire de rouleaux de support 42 et 43, disposés, dans un évidement 41 du bloc de matériau support 83, de part et d'autre de la ligne d'aplomb 44 du rouleau presseur 11. Un effet de porte-à-faux est ainsi obtenu selon le sens de déplacement de la carte, soit le sens perpendiculaire à celui du deuxième mode de réalisation de la figure 2 décrit ci-dessus.

On notera, sur les figures 3 et 4, que le bras coudé 13 a été lesté au moyen d'une masse M3 qui permet d'obtenir la force de pression désirée sur la carte 1.

Le mode de réalisation de la figure 5 combine les deuxième, troisième et quatrième modes de réalisation des figures 2, 3 et 4 respectivement. A cet effet, un axe 51 supporté par la cloison 15 supporte à pivotement trois axes coudés 52, 53, 54, munis chacun d'un rouleau presseur 55, 56, 57 ces trois rouleaux presseurs appliquent des forces généralement différentes, $\bar{F}_1$, $\bar{F}_2$, $\bar{F}_3$, contre la carte 1. Le bloc de matériau support 84 comporte quant à lui un logement 58, muni de trois rouleaux, 59 et 61, et 62. A la partie arrière du bloc support 84, une fente 63 permet la mise en oeuvre du deuxième mode de réalisation. Pour ce mode de réalisation combiné, les contraintes imposées à la zone de contacts 2 de la carte sont plus élevées que pour les premiers modes de réalisation précédemment décrits ; le nombre de passages alternants de la carte 1 sous les rouleaux presseurs peut être réduit à moins de 50 et l'on peut réduire en conséquence la durée du test qui est d'ailleurs plus complet que pour les autres modes de réalisation. Pour tous les modes de réalisation du dispositif de test, les rouleaux presseurs ou les rouleaux de support peuvent être constitués par des roulements à billes, par exemple en acier.

L'invention ne se limite pas à ce qui est décrit ci-dessus. Notamment, la carte pourrait être pincée latéralement au lieu de l'être en bout. On peut aussi prévoir de tester plusieurs cartes simultanément au moyen du même dispositif de test. Pour cela, la pince 7 doit être adaptée pour saisir en batterie une multiplicité de cartes, le bloc de matériau support doit être élargi en conséquence et le nombre de rouleaux ou de fentes multiplié par le nombre de cartes à tester. Par ailleurs, pour éviter un rebond de trop forte amplitude du ou des rouleau(x) presseur(s) sur la carte lors de l'introduction de cette dernière sous ce(ces) rouleau(x), on peut prévoir la mise en place de butée(s) solidaire(s) de la cloison 15, comme représenté en 65 à la figure 3, de façon à limiter la course de la retombée du rouleau en l'absence de carte. On notera aussi que la force à appliquer sur l'axe des rouleaux presseurs pourraît être obtenue autrement que par gravité, au moyen de ressorts calibrés notamment, de façon à permettre un mouvement alternant de la carte selon toute orientation désirée.

Enfin, le dispositif de test de l'invention peut être couplé avec un lecteur électrique de carte, à disposer à l'extrémité libre (à droite sur les figures), qui permet de vérifier en temps réel, c'est-à-dire à chaque passage alternant de la carte, le bon état de fonctionnement de cette dernière et de déclencher une alarme, ou l'arrêt du test, dès qu'une défaillance apparait.

**Revendications**

1. Dispositif de test mécanique de cartes, caractérisé en ce que, étant conçu pour tester des cartes à circuit(s) intégré(s) à contacts, il comporte des premiers moyens de support (8) contre lesquels est appliquée au moins une carte (1), des deuxièmes moyens de positionnement et de coulissement (4-7) pour imprimer à ladite carte un mouvement alternatif de va-et-vient sensiblement dans son plan et au moins un rouleau presseur (11) pour appliquer avec une force prédéterminée, par roulement sans glissement, ladite carte contre lesdits premiers moyens de support, lesdits premiers et deuxièmes moyens et ledit rouleau presseur étant agencés entre eux de telle sorte que le rouleau roule sur l'emplacement d'au moins une zone de circuit intégré (2), avec ou sans contacts, de la carte (1) à chaque mouvement de passage alternant de la carte.

2. Dispositif de test selon la revendication 1, caractérisé en ce que la largeur dudit rouleau (11) est légèrement inférieure au diamètre de la zone de circuit intégré (2) de la carte (1).

3. Dispositif de test selon la revendication 1 ou 2, caractérisé en ce qu'il est orienté pour tester chaque carte (1) horizontalement, et que l'axe dudit rouleau (11) est situé au-dessus de la carte et supporte un lest prédéterminé selon le type d'application envisagé pour la carte à tester.

4. Dispositif de test selon l'une des revendications 1 à 3, caractérisé en ce que lesdits premiers moyens de support (8) sont constitués par un bloc de matériau présentant une face plane conçue pour supporter à glissement chaque carte à tester.

5. Dispositif de test selon la revendication 4, caractérisé en ce que ledit bloc de matériau comporte, située en regard dudit rouleau presseur, une fente (21) dont la largeur est sensiblement égale au diamètre de ladite zone de circuit intégré de la carte.

6. Dispositif de test selon l'une des revendications 1 à 3, caractérisé en ce que lesdits premiers moyens de support (8) sont constitués par un rouleau de support (33) situé en regard dudit rouleau presseur (11).

7. Dispositif de test selon l'une des revendications 1 à 3, caractérisé en ce que lesdits premiers moyens de support sont constitués par une paire de rouleaux de support (42, 43) disposés de part et d'autre de l'aplomb dudit rouleau presseur (11).

8. Dispositif presseur selon l'une des revendications 1 à 3, caractérisé en ce qu'il comporte en outre deux rouleaux presseurs supplémentaires et que lesdits moyens de support sont constitués par un bloc de matériau comportant, en regard d'un premier rouleau presseur, une fente dont la largeur est sensiblement égale au diamètre de ladite zone de circuit intégré (2) de la carte (1), par un rouleau de support situé en regard d'un deuxième rouleau presseur et par une paire de rouleaux de support disposés de part et d'autre de l'aplomb dudit rouleau presseur.

9. Dispositif presseur selon l'une des revendications 1 à 8, caractérisé en ce que ladite force prédéterminée appliquée par un rouleau presseur (11) contre une carte (1) est comprise entre 7N et 15N.

10. Procédé de test mécanique de cartes, caractérisé en ce que, étant destiné au test de carte à circuit(s) intégré(s), il comporte la succession d'étapes suivantes :

   - l'insertion de chaque carte entre au moins un rouleau presseur et des moyens de support,
   - l'application d'une force de pincement de la carte, comprise entre 7N et 15N, entre ledit (lesdits) rouleau(x) presseur(s) et lesdits moyens de support,
   - la mise en mouvement de la carte selon un mouvement alternatif de va-et-vient sensiblement dans son plan dans un sens perpendiculaire aux génératrices du(des) rouleau(x) presseur(s) et de telle sorte que ce(ces) dernier(s) roule(nt) sur l'emplacement d'une zone de circuit intégré, avec ou sans contacts, de la carte à chaque mouvement de passage alternant de la carte.

11. Procédé de test mécanique de cartes selon la revendication 10, caractérisé en ce que pour une durée d'utilisation simulée de la carte égale à un an, le nombre de mouvements de passage alternant de la carte, aller et retour, est compris entre 10 et 60, à une fréquence de l'ordre de 0,5 Hz.

**Patentansprüche**

1. Vorrichtung zum mechanischen Prüfen von Karten dadurch gekennzeichnet, daß sie zum Prüfen von Chipkarten mit Kontakten erste Halteeinrichtungen (8), an die wenigstens eine Karte (1) anlegbar ist, zweite Einrichtungen (4-7) zum Positionieren und Verschieben, um der besagten Karte eine abwechselnd hin und her gehende Bewegung im Wesentlichen in ihrer Ebene zu geben, und wenigstens eine Druckrolle (11) umfaßt, um mit einer bestimmten Kraft durch Rollen ohne Gleitbewegung die besagte Karte an die besagten ersten Halteeinrichtungen zu legen, wobei die besagten ersten und zweiten Einrichtungen und die Druckrolle zueinander so angeordnet sind, daß die Rolle an einer Stelle wenigstens eines Chipbereiches (2) mit oder ohne Kontakte der Karte (1) bei jeder abwechselnden Laufbewegung der Karte abrollt.

2. Vorrichtung zum Prüfen nach Anspruch 1, dadurch gekennzeichnet, daß die Breite der besagten Rolle (11) etwas kleiner als der Durchmesser des Chipbereiches (2) der Karte (1) ist.

3. Vorrichtung zum Prüfen nach Anspruch 1 oder 2, dadurch gekennzeichnet, daß sie zum horizontalen Prüfen jeder Karte (1) ausgerichtet ist, und daß die Achse der besagten Rolle (11) über der Karte liegt und ein bestimmtes Gewicht je nach der Art der Anwendung trägt, die für die zu prüfende Karte vorgesehen ist.

4. Vorrichtung zum Prüfen nach einem der Ansprüche 1 bis 3, dadurch gekennzeichnet, daß die besagten ersten Halteeinrichtungen (8) aus einem Materialblock bestehen, der eine ebene Stirnfläche aufweist, die so ausgebildet ist, daß jede zu prüfende Karte gleitend verschiebbar gehalten ist.

5. Vorrichtung zum Prüfen nach Anspruch 4, dadurch gekennzeichnet, daß der besagte Materialblock der besagten Druckrolle gegenüber einen Schlitz (21) aufweist, dessen Breite im Wesentlichen gleich dem Durchmesser des besagten Chipbereiches der Karte ist.

6. Vorrichtung zum Prüfen nach einem der Ansprüche 1 bis 3, dadurch gekennzeichnet, daß die besagten ersten Halteeinrichtungen (8) aus einer Halterolle (33) bestehen, die sich der besagten Druckrolle (11) gegenüber befindet.

7. Vorrichtung zum Prüfen nach einem der Ansprüche 1 bis 3, dadurch gekennzeichnet, daß die besagten ersten Halteeinrichtungen aus einem Paar von Halterollen (42, 43) bestehen, die auf der einen und der anderen Seite der lotrechten Stellung der besagten Druckrolle (11) jeweils angeordnet sind.

8. Druckvorrichtung nach einem der Ansprüche 1 bis 3, dadurch gekennzeichnet, daß sie weiterhin zwei zusätzliche Druckrollen aufweist und daß die besagten Halteeinrichtungen aus einem Materialblock bestehen, der einer ersten Druckrolle gegenüber einen Schlitz aufweist, dessen Breite im Wesentlichen gleich dem Durchmesser des besagten Chipbereiches (2) der Karte (1) ist, wobei eine Halterolle der zweiten Druckrolle gegenüber angeordnet ist und ein Paar von Halterollen auf der einen Seite und der anderen Seite der lotrechten Stellung der besagen Druckrolle jeweils angeordnet ist.

9. Druckvorrichtung nach einem der Ansprüche 1 bis 8, dadurch gekennzeichnet, daß die besagte bestimmte Kraft, die von der Druckrolle (11) an eine Karte (1) gelegt wird, zwischen 7 N und 15 N liegt.

10. Verfahren zum mechanischen Prüfen von Karten, dadurch gekennzeichnet, daß es zum Prüfen einer Chipkarte die folgenden Schritte umfaßt:

    - Einführen jeder Karte zwischen wenigstens eine Druckrolle und Halteeinrichtungen,
    - Anlegen einer Klemmkraft an die Karte zwischen 7 N und 15 N zwischen der (den) Druckrolle(n) und den besagten Halteeinrichtungen,
    - Bewegen der Karte in eine abwechselnden hin und her gehenden Bewegung im Wesentlichen in ihrer Ebene in einer Richtung senkrecht zu den Erzeugenden der Druckrolle(n) und derart, daß letztere an einer Stelle im Chipbereich mit oder ohne Kontakte der Karte bei jeder abwechselnden Laufbewegung der Karte abrollt (abrollen).

11. Verfahren zum mechanischen Prüfen von Karten nach Anspruch 10, dadurch gekennzeichnet, daß für eine vorgegebene Benutzungsdauer der Karte gleich einem Jahr die Anzahl der abwechselnden Laufbewegungen der Karte vor und zurück zwischen 10 und 60 bei einer Frequenz in der Größenordnung von 0,5 Hz liegt.

## Claims

1. Mechanical test device for cards, characterized in that, as it is designed to test contact-type smart cards, it comprises supporting first means (8) against which at least one card (1) is applied, positioning and sliding second means (4-7) in order to transmit to the said card a back-and-forth alternating movement which is substantially in its plane, and at least one press roller (11) in order to apply, with a predetermined force, by rolling without sliding, the said card against the said supporting first means, the said first and second means and the said press roller being arranged with respect to one another such that the roller rolls over the site of at least one integrated circuit region (2), with or without contacts, of the card (1) on each alternating pass of the card.

2. Test device according to Claim 1, characterized in that the width of the said roller (11) is slightly less than the diameter of the integrated circuit region (2) of the card (1).

3. Test device according to Claim 1 or 2, characterized in that it is oriented in order to test each card (1) horizontally, and in that the spindle of the said roller (11) is located above the card and supports a weight predetermined according to the type of application envisaged for the card to be tested.

4. Test device according to one of Claims 1 to 3, characterized in that the said supporting first means (8) are formed by a block of material having a plane face designed to support, in sliding, each card to be tested.

5. Test device according to Claim 4, characterized in that the said block of material comprises, located facing the said press roller, a slot (21), the width of which is substantially equal to the diameter of the said integrated circuit region of the card.

6. Test device according to one of Claims 1 to 3, characterized in that the said supporting first means (8) are formed by a support roller (33) located facing the said press roller (11).

7. Test device according to one of Claims 1 to 3, characterized in that the said supporting first means are formed by a pair of support rollers (42, 43) placed one on each side of the vertical line through the said press roller (11).

8. Press device according to one of Claims 1 to 3, characterized in that it furthermore comprises two additional press rollers and in that the said support means are formed by a block of material comprising, facing a first press roller, a slot, the width of which is substantially equal to the diameter of the said integrated circuit region (2) of the card (1), by a support roller located facing a second press roller and by a pair of support rollers placed one on each side of the vertical line through the said press roller.

9. Press device according to one of Claims 1 to 8, characterized in that the said predetermined force applied by a press roller (11) against a card (1) is between 7 N and 15 N.

10. Mechanical test process for cards, characterized in that, as it is intended to test smart cards, it comprises the following series of steps:

    - inserting each card between at least one press roller and support means;
    - applying a pinching force to the card, of between 7 N and 15 N, between the said press roller(s) and the said support means;
    - setting the card in motion in a back-and-forth alternating movement which is substantially in its plane in a direction perpendicular to the generators of the press roller(s) and such that the latter rolls (roll) over the site of an integrated circuit region, with or without contacts, of the card on each alternating pass of the card.

11. Mechanical test process for cards according to Claim 10, characterized in that in order to simulate a card usage period of one year, the number of alternating passes of the card, back and forth, is between 10 and 60, at a frequency of about 0.5 Hz.

FIG.1

FIG.2

FIG.3

8

FIG.4

FIG.5